# EUROPÄISCHE PATENTSCHRIFT

(11) **EP 0 977 018 B1**
(45) Veröffentlichungstag und Bekanntmachung des Hinweises auf die Patenterteilung: **27.02.2002**
(21) Anmeldenummer: 98114000.7
(22) Anmeldetag: 27.07.1998
(51) Int. Cl.: G01F 1/58

(54) **Elektrodenanordnung für magnetisch-induktive Durchflussaufnehmer**
Electrode arrangement for magneto-inductive flow sensors
Arrangement d'électrodes pour débitmètres magnéto-inductives

(43) Veröffentlichungstag der Anmeldung: 02.02.2000
(73) Patentinhaber: Endress + Hauser Flowtec AG, CH-4153 Reinach BL 1 (CH)
(72) Erfinder: Graf, Oliver, 4447 Känerkinden (CH); Schoohf, Michael, 4153 Reinach(BL) (CH)
(74) Vertreter: Morstadt, Volker, Dipl.-Ing.

(56) Entgegenhaltungen:
- EP-A- 0 766 069
- GB-A- 2 047 409
- US-A- 3 177 709
- US-A- 4 517 846

## Beschreibung

Die Erfindung betrifft einen magnetisch-induktiven Durchflußaufnehmer.

Mit magnetisch-induktiven Durchflußmessern läßt sich bekanntlich der Volumendurchfluß von elektrisch leitfähigen Flüssigkeiten messen. Die Messung beruht auf dem Faradayschen Induktionsgesetz. Die Flüssigkeit wird durch ein Magnetfeld geschickt, so daß in ihr eine elektrische Spannung induziert wird, die mittels mindestens zweier Elektrodenanordnungen abgegriffen wird.

Die Mittel zur Führung der Flüssigkeit in Form eines Meßrohrs, zur Erzeugung des Magnetfelds, die Elektrodenanordnungen und gegebenenfalls weitere Komponenten bilden den magnetisch-induktiven Durchflußaufnehmer.

Das Meßrohr muß mindestens im Bereich des Magnetfelds innen aus einem Isoliermaterial bestehen, damit die induzierte Spannung nicht kurzgeschlossen wird. Deshalb werden metallische Meßrohre innen mit einem geeigneten Isoliermaterial beschichtet.

Metall-Meßrohre dürfen ferner nicht aus ferromagnetischem Material bestehen, damit das mittels einer außerhalb des Meßrohrs angeordneten Spulenanordnung erzeugte Magnetfeld die Flüssigkeit erreichen und durchsetzen kann. Meist werden die metallischen Meßrohre daher aus Edelstahl hergestellt, deren Außenfläche somit rostfrei ist und meist nicht weiters behandelt zu werden braucht.

Eine Elektrodenanordnung umfaßt eine Meßelektrode mit einem Kopf und einem Schaft, die in einer Bohrung der Wand des Meßrohrs so fixiert wird, daß sie ihr gegenüber elektrisch isoliert ist.

In der US-A 45 17 846 ist ein magnetisch-induktiver Durchflußaufnehmer beschrieben, der umfaßt:
- ein Meßrohr aus einem metallischen, nicht-ferromagnetischen Material,
   -- das innen mit einem Isoliermaterial versehen ist,
- eine Spulenanordnung zur Erzeugung eines das Meßrohr im wesentlichen senkrecht durchsetzenden, eine Mittelachse aufweisenden Magnetfelds und
- zwei auf einem zur Mittelachse senkrechten Durchmesser des Meßrohrs einander gegenüberliegende Elektrodenanordnungen,
welche Elektrodenanordnungen jeweils umfassen:
- eine Meßelektrode mit einem Kopf und mit einem ein Außengewinde aufweisenden Schaft von kleinerem Durchmessers als der Kopf, die in einer Bohrung einer Wand des Meßrohrs, gegenüber dieser isoliert, mittels eines Isolierkörpers eingesetzt ist,
   -- der einen scheiben-förmigen Teil sowie
   -- einen rohrförmigen, in die Bohrung passenden Ansatz aufweist und
   -- unter Zwischenlage einer Scheibe mittels einer auf das Außengewinde des Schaftes geschraubten Mutter mit dem Ansatz in der Bohrung bzw. mit dem scheiben-förmigen Teil auf der Außenfläche des Meßrohrs fixiert ist.

Die Isolation zwischen Meßrohr und Meßelektrode muß sehr gut sein, weil die induzierte Spannung nur kleine Werte in der Größenordnung von 1 mV hat und deren Innenwiderstand in der Größenordnung von 100 kΩ liegen kann.

Als Maß für die Güte der Isolation dient üblicherweise der Ohmsche Isolationswiderstand, der zwischen der Meßelektrode und dem Meßrohr existiert. Bei trockenen Verhältnissen liegen üblicherweise Werte des Isolationswiderstands in der Größenordnung von 100 MΩ vor.

Es hat sich nun gezeigt, daß diese Werte im Betrieb der Durchflußaufnehmer sich bis in die Größenordnung des Innenwiderstands der induzierten Spannung verschlechtern können, wodurch diese auf ca. die Hälfte vermindert wird. Untersuchungen der Erfinder ergaben, daß dies hauptsächlich dann auftritt, wenn das Meßrohr kälter als die Umgebungsluft ist. Diese gelangt nämlich gewöhnlich in ein die Elektroden-Anordnungen umgebendes Gehäuse, selbst wenn dieses ausgeschäumt ist.

Es schlägt sich somit auf dem Meßrohr, insb. in der Nähe der Meßelektroden, Feuchtigkeit nieder, was bis zur Bildung von Wassertröpfchen führen kann. Die Feuchtigkeit kriecht nun infolge von Kapillarkräften in allfällig bestehende Spalte, die einerseits zwischen den Meßelektroden und der Isolierung und andererseits zwischen der Isolierung und dem Meßrohr bestehen. Ferner können sich durch Adhäsionswirkung Feuchtigkeitsfilme auf äußeren Oberflächen der Isolierung und der Meßelektroden bilden.

Es ist daher eine Aufgabe der in den Ansprüchen definierten Erfindung, die Erniedrigung des Isolationswiderstands der Meßelektroden mittels konstruktiver Ausbildung der Elektrodeanordnung zu vermeiden. Die genannte Aufgabe wird erfindungsgemäß durch die Merkmale des Anspruchs 1 gelöst.

Ein Vorteil der Erfindung besteht darin, daß dadurch, daß sich kein Flüssigkeitsfilm auf dem hydrophoben Formkörper ausbilden kann, die Verringerung des Isolationswiderstands vermieden und die induzierte Spannung nicht abgeschwächt wird. Daher treten ferner auch keine Langzeitschwankungen des Isolationswiderstands auf, die zu Störspannungen führten, die der induzierten Spannung überlagert wären.

Die Erfindung wird nun anhand der Figuren der Zeichnung näher erläutert, in der bevorzugte Ausführungsbeispiele dargestellt sind.
- Fig. 1: zeigt teilweise im Längsschnit eine erste Elektrodenanordnung, und
- Fig. 2: zeigt teilweise im Längsschnitt zwei Varianten einer zweiten Elektrodenanordnung.

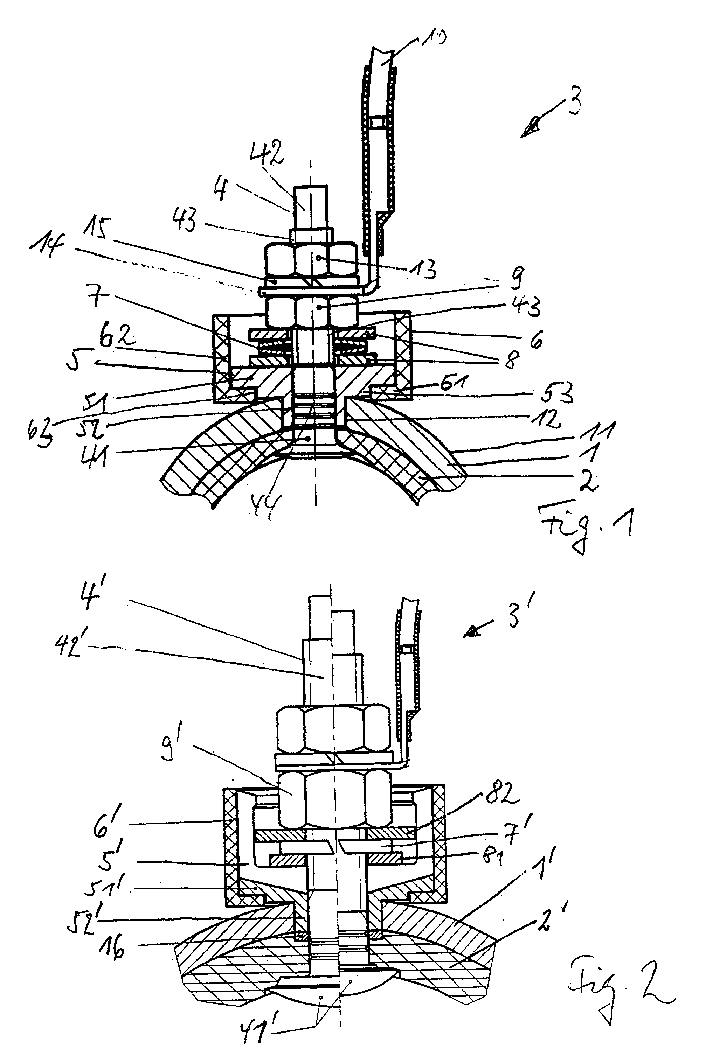

Bei der in Fig. 1 teilweise im Längsschnitt gezeigten ersten Elektrodenanordnung ist diese in einem bereits in ein Meßrohr 1 eines magnetisch-induktiven Durchflußaufnehmers eingebauten Zustand dargestellt. Vom Meßrohr 1 ist nur ein elektroden-naher Teil dargestellt, und es besteht aus einem metallischen, nicht-ferromagnetischen Material, insb. aus einem Edelstahl.

Das Meßrohr 1 ist innen mit einem Isoliermaterial 2 versehen, das eines der für diesen Zweck in der Technik der magnetisch-induktiven Durchflußmesser üblichen Materialien sein kann, also z.B. Polytetrafluorethylen, Hartgummi, Weichgummi etc. Im Ausführungsbeispiel der Fig. 1 ist Polytetrafluorethylen als Isoliermaterial 2 vorausgesetzt. Eine Außenfläche 11 des Meßrohrs 1 ist bei dessen Fertigung unbehandelt gebleiben, also blank.

Eine Elektrodenanordnung 3 umfaßt eine Meßelektrode 4 mit einem Kopf 41 und mit einem Schaft 42, der einen kleineren Durchmessers als der Kopf 41 hat und mit einem Außengewinde 43 versehen ist. Die Meßelektrode 4 ist in einer Bohrung 12 einer Wand des Meßrohrs 1 mittels eines Isolierkörpers 5 eingesetztt, so daß Meßelektrode 4 und Meßrohr 1 elektrisch voneinander isoliert sind.

Der Isolierkörper 5 hat einen scheiben-förmigen Teil 51 und einen rohrförmigen, in die Bohrung 12 passenden Ansatz 52. Der scheiben-förmige Teil 51 hat einen Durchmesser der größer als der Außen-Durchmesser des Ansatzes 52 ist. Der Ansatz 52 ist etwas kürzer als die Wand des Meßrohrs 1 dick ist. Wenn die Meßelektrode 4 dagegen endgültig eingebaut ist, wie es in Fig. 1 dargestellt ist, reicht der Ansatz 52 bis zum Isoliermaterial 2, da dieses durch den Kopf 41 gegen die Wand des Meßrohrs 1 gepreßt wird. Dadurch wird der zwischen dem Ende des Ansatzes 52 und der Außenfläche des Meßrohrs 1 zunächst bestehende Hohlraum ausgefüllt.

Ein zylindrisches Formteil 6 hat einen Boden 61 und einen Wandteil 62 und besteht aus einem elektrisch isolierenden, hydrophoben Material; hierfür ist Perfluoralkoxy ganz besonders gut geeignet. Im Boden 61 befindet sich eine Zentralöffnung 63 mit einem Durchmesser, der kleiner als der Durchmesser des scheiben-förmigen Teils 51 des Isolierkörpers 5 ist. Somit greift der Boden 61 unter den scheiben-förmigen Teil 51 und läßt sich gegen die Außenfläche 11 des Meßrohrs 1 drücken.

Wie in Fig. 1 dargestellt ist, kann der scheiben-förmige Teil 51 so abgestuft ausgebildet sein, daß ein unterer Stutzen 53 einen Durchmesser hat, der dem Durchmesser der Zentralöffnung entspricht, so daß der Stutzen 53 in diese genau hineinpaßt. Die Dicke des Stutzens 53 ist etwas kleiner als die Dicke des Bodens 61, so daß dieser im fertigen Zustand, wie erwähnt, sicher gegen die Außenfläche 11 des Meßrohrs 1 gepreßt wird.

Der Wandteil 62 des Formteils 6 hat einen Innen-Durchmesser, der leicht größer als der Durchmesser des scheiben-förmigen Teils 51 ist. Somit paßt dieser in das Formteil 6 hinein.

Die Elektrodenanordnung 3 umfaßt ferner noch ein Federteil 7, das hier ein doppelseitig wirkendes Federelement ist, zwei Unterlegscheiben 8 und eine Mutter 9. Die Komponenten der Elektrodenanordnung 3 werden wie folgt und in der angegebenen Reihenfolge zusammengebaut:
Zunächst wird die Meßelektrode 4 von innen durch die Bohrung 12 des Meßrohrs 1 gesteckt; in dieser hält sie sich selbst. Am unteren Teil des Schaftes 42 angebrachten Rillen 44 dienen der Unterscheidbarkeit von verschiedenen, für die Meßelektrode 4 verwendeten Materialien, wie z.B. der Edelstahl 1.4435, der Edelstahl Hast C 22, ein Chrom-Nickel-Stahl, eine Platin-Rhodium-Legierung mit 20 Atom% Rhodium oder Tantal etc.

Dann werden das Formteil 6 und der Isolierkörper 5 auf den Schaft 42 geschoben und der Ansatz 52 in der Bohrung 12 zentriert. Nun wird eine der beiden Unterlegscheiben 8 auf den Schaft 42 und darüber das Federteil 7 und darüber die zweite der Unterlegscheiben 8 geschoben. Schließlich wird die Mutter 9 aufgeschraubt und so angezogen, daß das Federteil 7 unter Druckspannung gesetzt ist.

Durch diese Druckspannung wird einerseits der Boden 61 des Formteils 6 gegen die Außenfläche 11 des Meßrohrs 1 gedrückt und andererseits wird der Kopf 41 der Meßelektrode 4 fest gegen das Polytetrafluorethylen als Isoliermaterial 2 gezogen und bildet eine kleine Vertiefung darin.

Daher ist der Kopf 41 gegen die im Meßrohr 1 strömende Flüssigkeit sicher abgedichtet, und der außerhalb des Meßrohrs 1 befindliche Teil der Elektrodeannordnung 3 ist gegen Feuchte geschützt, die z.B. von der Außenfläche 11 des Meßrohrs 1 zur Meßelektrode 4 zu kriechen sucht. Ferner wird vom hydrophoben Formteil 5 sicher verhindert, daß sich ein Kondenswasserfilm zwischen der Außenfläche 11 und der Meßelektrode 4 aufbauen kann.

In Fig. 1 ist noch im fertigen Zustand dargestellt, wie die Elektrodenanordnung 3 mit einer elektrischen Zuleitung 10 verbunden werden kann. Hierzu dienen eine weitere Mutter 13, eine Lötöse 14, mit der die Zuleitung 10 verlötet ist, und ein Sprengring 15. Diese Teile sind wie dargestellt auf dem Gewinde 43 der Meßelektrode 4 durch Anziehen der Mutter 13 befestigt.

In Fig. 2 sind teilweise im Längsschnitt zwei Varianten einer zweiten Elektrodenanordnung 3' dargestellt, und zwar derart, daß von der einen Variante nur die linke Hälfte und von der anderen Variante nur die rechte Hälfte zu sehen ist. In Fig. 2 sind nur solche Bezugszeichen von Fig. 1 wiederholt, die zur Erläuterung von Fig. 2 erforderlich sind. Es werden nur noch die Unterschiede der Fig. 2 im Vergleich zu Fig. 1 erläutert.

Die linke Variante unterscheidet sich von der rechten dadurch, daß die linke Variante für größere Nennweiten als die rechte Variante gedacht ist, so daß die Meßelektrode 4' länger und das Isoliermaterial 2' dicker ausgebildet ist.

Bei beiden Varianten ist als Isoliermaterial 2' Hart- oder Weichgummi vorausgesetzt. Daher bedarf der Kopf 41' eines Dichtrings 16 aus Polytetrafluorethylen. Dieser ist unterhalb des Ansatzes 52' in die Bohrung der Wand des Meßrohrs 1', die sich etwas in das Isoliermaterial 2' hinein erstreckt, eingesetzt und trägt zur Abdichtung des Kopfes 41' und der angrenzenden Teile des Schaftes 42' der Meßelektrode 4' bei.

Der Isolierkörper 5' ist hier der gesamten Innenkontur des Formteils 6' angepaßt, d.h. er reicht bis zur Oberkante des letzteren. In diesem Bereich ist der Isolierkörper 5' ferner mehrfach geschlitzt ausgebildet. Als Federteil 7' ist anstatt eines doppelseitigen Federelements wie in Fig. 1 ein Sprengring vorgesehen. Beide Arten von Federteilen sind natürlich gegeneinander austauschbar.

Die Komponenten der Elektrodenanordnung 3' werden wie folgt und in der angegebenen Reihenfolge zusammengebaut:
Zunächst wird die Meßelektrode 4' von innen durch die Bohrung des Meßrohrs 1' gesteckt; in dieser hält sie sich selbst. Dann werden in den Isolierkörper 5' eine Unterlegscheibe 81 der Sprengring 7' und eine weitere Unterlegscheibe 82 eingesetzt. Darauf werden das Formteil 6' und anschließend der wie eben beschrieben vorbereitete Isolierkörper 5' auf den Schaft 42' geschoben. Schließlich wird die Mutter 9' aufgeschraubt und so angezogen, daß der Sprengring 7' unter Druckspannung gesetzt ist.

## Patentansprüche

1. Magnetisch-induktiver Durchflußaufnehmer, der umfaßt:
- ein Meßrohr (1, 1') aus einem metallischen, nicht-ferromagnetischen Material,
-- das innen mit einem Isoliermaterial (2, 2') versehen ist und
-- von dem eine Außenfläche (11) unbehandelt ist,
- eine Spulenanordnung zur Erzeugung eines das Meßrohr im wesentlichen senkrecht durchsetzenden, eine Mittelachse aufweisenden Magnetfelds und
- zwei auf einem zur Mittelachse senkrechten Durchmesser des Meßrohrs einander gegenüberliegende Elektrodenanordnungen (3, 3'),
welche Elektrodenanordnungen jeweils (3, 3') umfassen:
- eine Meßelektrode (4, 4') mit einem Kopf (41, 41') und mit einem ein Außengewinde (43) aufweisenden Schaft (42, 42') von kleinerem Durchmessers als der Kopf, die in einer Bohrung (12) einer Wand des Meßrohrs, gegenüber dieser isoliert, mittels eines Isolierkörpers (5, 5') eingesetzt ist,
-- der einen scheiben-förmigen Teil (51, 51') und
-- einen rohrförmigen, in die Bohrung passenden Ansatz (52, 52') aufweist, und
- ein einen Boden (61) und einen Wandteil (62) aufweisendes, zylindrisches Formteil (6, 6') aus einem elektrisch isolierenden, hydrophoben Material,
-- dessen Boden eine Zentralöffnung (63) mit einem Durchmesser aufweist, der kleiner als der Durchmesser des scheiben-förmigen Teils (51, 51') ist und
-- dessen Wandteil einen Innen-Durchmesser hat, der leicht größer als der Durchmesser des scheiben-förmigen Teils ist,
-- wobei in der angegebenen Reihenfolge das zylindrische Formteil (6, 6'), der Isolierkörper (5, 5') und ein Federteil (7, 7') mittels einer auf das Außengewinde (43) des Schaftes geschraubten Mutter (9) mit dem Ansatz in der Bohrung bzw. mit dem scheiben-förmigen Teil und dem Boden auf der Außenfläche des Meßrohrs fixiert sind.

2. Magnetisch-induktiver Durchf lußmesser nach Anspruch 1, bei dem der Ansatz (52, 52') des scheiben-förmigen Teils des Isolierkörpers (5, 5') in die Zentralöffnung des Formteils paßt.

3. Magnetisch-induktiver Durchflußmesser nach Anspruch 1 oder 2, bei dem das Formteil aus Perfluoralkoxy besteht.

## Claims

1. A magneto-inductive flow sensor comprising:
- a measuring tube (1, 1') made of a metallic, non-ferromagnetic . material
-- which is provided on the inside with an insulating material (2, 2') and
-- an outer surface (11) of which is untreated,
- a coil arrangement for generating a magnetic field penetrating the measuring tube substantially perpendicularly and having a central axis and
- two electrode arrangements (3, 3') opposite one another on a diameter of the measuring tube perpendicular to the central axis,
the electrode arrangements (3, 3') each comprising:
- a measuring electrode (4, 4') which has a head (41, 41') and a shaft (42, 42') provided with an external thread (43) and being of smaller diameter than the head and which is inserted into a bore (12) in a wall of the measuring tube and is insulated therefrom by means of an insulator (5, 5')
- - comprising a disc-shaped part (51, 51') and
- - a tubular extension (52, 52') fitting into the bore, and
- a cylindrical moulded part (6, 6') having a base (61) and a wall part (62) and made of an electrically insulating, hydrophobic material,
-- the base of which has a central opening (63) with a diameter smaller than the diameter of the disc-shaped part (51, 51') and
-- the wall part of which has an inner diameter slightly larger than the diameter of the disc-shaped part,
-- wherein, in the order stated, the cylindrical moulded part (6, 6'), the insulator (5, 5') and a spring part (7, 7') are fixed, by means of a nut (9) screwed onto the external thread (43) of the shaft, to the extension in the bore, to the disc-shaped part and to the base on the outer surface of the measuring tube.

2. A magneto-inductive flow meter according to claim 1, wherein the extension (52, 52') of the disc-shaped part of the insulator (5, 5') fits into the central opening in the moulded part.

3. A magneto-inductive flow meter according to claim 1 or 2, wherein the moulded part comprises perfluoroalkoxy.

## Revendications

1. Capteur de débit magnéto-inductif comprenant :
- un tube de mesure (1, 1') en matériau métallique non ferro-magnétique,
-- pourvu à l'intérieur d'un matériau isolant (2, 2'), et
-- dont l'une des surfaces extérieures (11) n'est pas traitée,
- un dispositif de bobines pour générer un champ magnétique présentant un axe central et traversant le tube de mesure pour l'essentiel dans le sens vertical, et
- deux dispositifs d'électrodes (3, 3') placés face à face sur un diamètre du tube de mesure vertical par rapport à l'axe central,
lesquels dispositifs d'électrodes (3, 3') comprenant respectivement :
- une électrode de mesure (4, 4') avec une tête (41, 41') et une tige (42, 42') présentant un filet extérieur (43) et un diamètre inférieur à celui de la tête, électrode disposée à l'aide d'un corps isolant (5, 5') dans un perçage (12) d'une paroi du tube de mesure, isolée par rapport à cette paroi,
-- corps isolant présentant un élément (51, 51') en forme de disque et
-- un téton (52, 52') tubulaire complémentaire du perçage, et
- une pièce moulée (6, 6') cylindrique présentant un fond (61) et un élément de paroi (62) en matériau hydrophobe électriquement isolant,
-- dont le fond présente un orifice central (63) d'un diamètre inférieur à celui de l'élément (51, 51') en forme de disque, et
-- dont l'élément de paroi présente un diamètre intérieur légèrement plus grand que celui de l'élément en forme de disque,
-- où, dans l'ordre indiqué, la pièce moulée (6, 6'), le corps isolant (5, 5') et un élément élastique (7, 7') sont fixés, à l'aide d'un écrou (9) vissé sur le filet extérieur (43) de la tige, sur le téton dans le perçage ou sur l'élément en forme de disque et le fond sur la surface extérieure du tube de mesure.

2. Capteur de débit magnéto-inductif selon la revendication 1, où le téton (52, 52') de l'élément en forme de disque du corps isolant (5, 5') est adapté à l'orifice central de la pièce moulée.

3. Capteur magnéto-inductif selon la revendication 1 ou 2, où la pièce moulée est en alcoxyde perfluoré.
